# EUROPÄISCHE PATENTSCHRIFT

(11) **EP 3 485 615 B1**
(45) Veröffentlichungstag und Bekanntmachung des Hinweises auf die Patenterteilung: **11.03.2020**
(21) Anmeldenummer: 17751262.1
(22) Anmeldetag: 14.07.2017
(51) Int. Cl.: H04L 12/46

(54) **FELDBUSGERÄT ZUM KOMMUNIZIEREN MIT EINEM AUTOMATISIERUNGSGERÄT**
FIELD BUS APPARATUS FOR COMMUNICATING WITH A REMOTE AUTOMATION DEVICE
APPAREIL DE BUS DE TERRAIN DESTINÉ À COMMUNIQUER AVEC UN APPAREIL D'AUTOMATISATION À DISTANCE

(30) Priorität: 14.07.2016 EP 16179559
(43) Veröffentlichungstag der Anmeldung: 22.05.2019
(73) Patentinhaber: Deutsche Telekom AG, 53113 Bonn (DE)
(72) Erfinder: NEUBACHER, Andreas, A-2100 Korneuburg (AT)
(74) Vertreter: Braun-Dullaeus Pannen Emmerling Patent- & Rechtsanwaltspartnerschaft mbB
(86) Internationale Anmeldenummer: PCT/EP2017/067837
(87) Internationale Veröffentlichungsnummer: WO 2018/011395

(56) Entgegenhaltungen:
- DE-A1-102006 030 706
- DE-A1-102013 018 596
- US-A1- 2009 119 437
- US-A1- 2014 269 744

## Beschreibung

### TECHNISCHES GEBIET

Die vorliegende Erfindung betrifft das Gebiet der Industrieautomatisierungstechnik, insbesondere der Kommunikation zwischen Automatisierungsgeräten über ein Kommunikationsnetzwerk.

### TECHNISCHER HINTERGRUND

Im Bereich der Industrieautomatisierungstechnik erfolgt eine Kommunikation zwischen Automatisierungsgeräten typischerweise über einen Feldbus. Bei der Kommunikation über den Feldbus werden zumeist einfache Kommunikationsprotokolle eingesetzt, welche eine einfache Kommunikation zwischen örtlich benachbarten Automatisierungsgeräten ermöglichen. Die Kommunikation kann beispielsweise Ring-basiert erfolgen, wobei Daten beispielsweise unter Verwendung von Ethernet-Telegrammen ausgetauscht werden können.

Bekannte Feldbusstandards im Bereich der Industrieautomatisierungstechnik sind beispielsweise der Profibus-Feldbusstandard oder der Profinet-Feldbusstandard von Profibus & Profinet International (PI). Mögliche Anwendungsgebiete für derartige Feldbusse liegen in der Kommunikation zwischen örtlich benachbarten Automatisierungsgeräten, beispielsweise Industriemaschinen, Robotern, Bestückungsautomaten oder Fräsern, welche mittels der Ethernet-Telegramme angesteuert werden können. Beispielsweise unterstützt der Profinet-Feldbusstandard als Industrial Ethernet-Standard das TCP/IP-Kommunikationsprotokoll, welches eine Ethernet-basierte Kommunikation ermöglicht.

Eine Herausforderung für die Kommunikation über einen Feldbus bildet die Anbindung von Automatisierungsgeräten, welche an unterschiedlichen Standorten angeordnet sind, um beispielsweise an den unterschiedlichen Standorten unterschiedliche Komponenten herzustellen. Entsprechende Ansätze hierfür werden zumeist unter dem Begriff der Industrie 4.0 zusammengefasst. Ein vollständiger Austausch der eingesetzten Feldbusse im Bereich der Industrieautomatisierungstechnik erscheint aufgrund der seit Jahren bestehenden und oft gewachsenen Lösungen nicht umsetzbar. Zudem werden viele Automatisierungsgeräte bereits im Feld eingesetzt, deren Laufzeiten noch auf Jahre hinaus fest eingeplant sind. Aus diesem Grund werden bestehende Feldbusse zumeist unverändert beibehalten.

In DE 10 2013 018 596 A1 ist ein Netzwerksystem mit einer ersten Netzwerkinfrastruktur, einer Cloud-Computing-Infrastruktur sowie einer Koppeleinheit offenbart, wobei die erste Netzwerkinfrastruktur einen Netzwerkteilnehmer aufweist, und wobei die Koppeleinheit ausgebildet ist, wenigstens einen weiteren Netzwerkteilnehmer für die erste Netzwerkinfrastruktur zu emulieren.

In EP 2 485 437 A1 ist eine Vorrichtung zum Pseudo Wire Emulation Edge-to-Edge (PWE3) Zugriff offenbart, wobei eine Einkapselung sowie eine Entkapselung von Nicht-Ethemet-Daten durchgeführt wird.

Die DE 10 2013 018 596 A1 offenbart eine Bridge zwischen einem Feldbus und einem Netzwerk. Über das Netzwerk empfangene Daten werden in der Bridge entkapselt und an vorbestimmte Teilnehmer des Feldbusses gesendet, bei gleichzeitiger Emulation von unterschiedlichen Layer 2 Paket Headern.

### BESCHREIBUNG DER ERFINDUNG

Es ist daher die Aufgabe der vorliegenden Erfindung, ein effizientes Konzept zur Kommunikation zwischen räumlich verteilten Automatisierungsgeräten schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch ein Feldbusgerät gelöst werden kann, welches ein entferntes Automatisierungsgerät kommunikationstechnisch emulieren kann. Die Kommunikation mit einer Gruppe von örtlich benachbarten Automatisierungsgeräten kann dabei unter Verwendung eines etablierten Feldbusstandards erfolgen. Ein Feldbussignal, welches für das entfernte Automatisierungsgerät bestimmt ist, kann durch das Feldbusgerät empfangen und in einen Datenrahmen eingekapselt werden. Der Datenrahmen wird anschließend über ein Kommunikationsnetzwerk zu einem weiteren Feldbusgerät übertragen, welches mit dem Automatisierungsgerät verbunden ist. Das weitere Feldbusgerät kann das Feldbussignal aus dem Datenrahmen entkapseln und an das Automatisierungsgerät aussenden.

Ferner ist eine Kommunikation in entgegengesetzter Richtung möglich, wobei die Rollen des Feldbusgerätes und des weiteren Feldbusgerätes entsprechend vertauscht sind. Es kann folglich ein Sendeempfänger (engl. transceiver) zum Austausch von Datenrahmen mit Feldbussignalen über das Kommunikationsnetzwerk realisiert werden.

Dadurch wird erreicht, dass eine effiziente Kommunikation zwischen räumlich verteilten Automatisierungsgeräten realisiert werden kann. Bestehende Feldbusse im Bereich der Industrieautomatisierungstechnik, welche beispielsweise auf der Basis des Profibus-Feldbusstandards oder des Profinet-Feldbusstandards implementiert sind, können zur Kommunikation zwischen den räumlich verteilten Automatisierungsgeräten weiterverwendet werden. Die Kommunikation zwischen den räumlich verteilten Automatisierungsgeräten kann in Echtzeit erfolgen.

Gemäß einem ersten Aspekt betrifft die Erfindung ein Feldbusgerät zum Kommunizieren mit einem entfernten Automatisierungsgerät über ein Kommunikationsnetzwerk, wobei das Feldbusgerät mit einer Gruppe von örtlich benachbarten Automatisierungsgeräten über einen Feldbus verbindbar ist. Das Feldbusgerät umfasst eine Feldbusschnittstelle zum kommunikationstechnischen Emulieren des entfernten Automatisierungsgerätes, wobei die Feldbusschnittstelle ausgebildet ist, ein Feldbussignal über den Feldbus zu empfangen, welches für das entfernte Automatisierungsgerät bestimmt ist. Das Feldbusgerät umfasst ferner eine Netzwerkschnittstelle zum Kommunizieren über das Kommunikationsnetzwerk, wobei die Netzwerkschnittstelle ausgebildet ist, das Feldbussignal in einen Datenrahmen einzukapseln, und den Datenrahmen über das Kommunikationsnetzwerk an das entfernte Automatisierungsgerät auszusenden. Dadurch wird der Vorteil erreicht, dass ein effizientes Konzept zur Kommunikation zwischen räumlich verteilten Automatisierungsgeräten realisiert werden kann.

Das kommunikationstechnische Emulieren des entfernten Automatisierungsgerätes umfasst das Nachbilden des kommunikationstechnischen Verhaltens, insbesondere der physikalischen Schicht sowie der Kommunikationsprotokolle, zum Kommunizieren über den Feldbus. Durch das Einkapseln des Feldbussignals in den Datenrahmen kann das Format des Feldbussignals unverändert bleiben.

Gemäß einer Ausführungsform umfasst die Feldbusschnittstelle einen Emulator, insbesondere einen Hardware-Emulator oder einen Software-Emulator, zum kommunikationstechnischen Emulieren des entfernten Automatisierungsgerätes. Dadurch wird der Vorteil erreicht, dass das Nachbilden des kommunikationstechnischen Verhaltens effizient realisiert werden kann. Der Hardware-Emulator kann durch eine elektrische Schaltung, insbesondere ein FPGA (engl. Field Programmable Gate Array), realisiert werden. Der Software-Emulator kann durch einen Programmcode realisiert werden, welcher durch einen Prozessor ausgeführt wird.

Gemäß einer Ausführungsform umfasst die Netzwerkschnittstelle ein Gateway zum Aufbauen einer Kommunikationsverbindung zwischen dem Feldbusgerät und einem weiteren Feldbusgerät über das Kommunikationsnetzwerk. Dadurch wird der Vorteil erreicht, dass die Kommunikationsverbindung effizient aufgebaut werden kann. Die Kommunikationsverbindung kann authentifiziert und/oder verschlüsselt sein.

Gemäß einer Ausführungsform ist der Feldbusschnittstelle eine Feldbusnetzwerkadresse des entfernten Automatisierungsgerätes zugeordnet, wobei die Feldbusschnittstelle ausgebildet ist, mit der Gruppe von örtlich benachbarten Automatisierungsgeräten unter Verwendung der Feldbusnetzwerkadresse über den Feldbus zu kommunizieren. Dadurch wird der Vorteil erreicht, dass das entfernte Automatisierungsgerät effizient adressiert werden kann.

Gemäß einer Ausführungsform ist die Feldbusschnittstelle ausgebildet, unter Verwendung eines Profinet-Feldbusstandards oder eines Profibus-Feldbusstandards mit der Gruppe von örtlich benachbarten Automatisierungsgeräten zu kommunizieren. Dadurch wird der Vorteil erreicht, dass ein etablierter Feldbusstandard zur Kommunikation verwendet werden kann.

Gemäß einer Ausführungsform weist der Datenrahmen eine Mehrzahl von Zeitschlitzen auf, wobei dem entfernten Automatisierungsgerät ein Zeitschlitz der Mehrzahl von Zeitschlitzen zugeordnet ist, und wobei die Netzwerkschnittstelle ausgebildet ist, das Feldbussignal in den Zeitschlitz einzukapseln. Dadurch wird der Vorteil erreicht, dass eine Übertragung des Feldbussignals im Zeitmultiplex realisiert werden kann.

Gemäß einer Ausführungsform ist die Netzwerkschnittstelle ausgebildet, ein Dienstgütemaß einer Kommunikation zwischen dem Feldbusgerät und einem weiteren Feldbusgerät über das Kommunikationsnetzwerk zu bestimmen, wobei die Netzwerkschnittstelle ausgebildet ist, das Dienstgütemaß mit einem Referenzgütemaß zu vergleichen, und wobei die Netzwerkschnittstelle ausgebildet ist, den Datenrahmen über das Kommunikationsnetzwerk an das entfernte Automatisierungsgerät auszusenden, falls das Dienstgütemaß das Referenzgütemaß überschreitet. Dadurch wird der Vorteil erreicht, dass eine QoS (engl. Quality of Service) bei der Kommunikation zwischen dem Feldbusgerät und dem weiteren Feldbusgerät berücksichtigt werden kann. Das Dienstgütemaß kann eine zeitliche Verzögerung, einen zeitlichen Jitter, eine Verlustrate oder einen Durchsatz der Kommunikation zwischen dem Feldbusgerät und dem weiteren Feldbusgerät anzeigen. Ein hohes Dienstgütemaß kann eine hohe QoS anzeigen. Ein geringes Dienstgütemaß kann eine geringe QoS anzeigen.

Gemäß einer Ausführungsform umfasst das Kommunikationsnetzwerk eine Mehrzahl von Subnetzwerken, wobei die Netzwerkschnittstelle ausgebildet ist, den Datenrahmen über ein Subnetzwerk der Mehrzahl von Subnetzwerken an das entfernte Automatisierungsgerät auszusenden. Dadurch wird der Vorteil erreicht, dass eine effiziente Übertragung des Datenrahmens über das Kommunikationsnetzwerk realisiert werden kann.

Gemäß einer Ausführungsform ist das Kommunikationsnetzwerk ein Kommunikationsnetzwerk der fünften Generation (5G) oder einer weiteren Generation, wobei jedes Subnetzwerk der Mehrzahl von Subnetzwerken ein Slice des Kommunikationsnetzwerkes ist. Dadurch wird der Vorteil erreicht, dass eine effiziente Übertragung des Datenrahmens über ein Kommunikationsnetzwerk der fünften Generation (5G) oder einer weiteren Generation realisiert werden kann.

Gemäß einem zweiten Aspekt betrifft die Erfindung ein Feldbusgerät zum Kommunizieren mit einem Automatisierungsgerät über einen Feldbus, wobei das Feldbusgerät mit einem weiteren Feldbusgerät über ein Kommunikationsnetzwerk verbindbar ist, und wobei das weitere Feldbusgerät ausgebildet ist, das Automatisierungsgerät kommunikationstechnisch zu emulieren. Das Feldbusgerät umfasst eine Netzwerkschnittstelle zum Kommunizieren über das Kommunikationsnetzwerk, wobei die Netzwerkschnittstelle ausgebildet ist, einen Datenrahmen über das Kommunikationsnetzwerk von dem weiteren Feldbusgerät zu empfangen, und ein Feldbussignal aus dem Datenrahmen zu entkapseln, welches für das Automatisierungsgerät bestimmt ist. Das Feldbusgerät umfasst ferner eine Feldbusschnittstelle zum Kommunizieren mit dem Automatisierungsgerät über den Feldbus, wobei die Feldbusschnittstelle ausgebildet ist, das Feldbussignal über den Feldbus an das Automatisierungsgerät auszusenden. Dadurch wird der Vorteil erreicht, dass ein effizientes Konzept zur Kommunikation zwischen räumlich verteilten Automatisierungsgeräten realisiert werden kann.

Das Automatisierungsgerät, welches mit dem Feldbusgerät über den Feldbus verbunden ist, kann von der Gruppe von örtlich benachbarten Automatisierungsgeräten örtlich entfernt angeordnet sein.

Gemäß einer Ausführungsform umfasst die Netzwerkschnittstelle ein Gateway zum Aufbauen einer Kommunikationsverbindung zwischen dem Feldbusgerät und dem weiteren Feldbusgerät über das Kommunikationsnetzwerk. Dadurch wird der Vorteil erreicht, dass die Kommunikationsverbindung effizient aufgebaut werden kann. Die Kommunikationsverbindung kann authentifiziert und/oder verschlüsselt sein.

Gemäß einer Ausführungsform weist der Datenrahmen eine Mehrzahl von Zeitschlitzen auf, wobei dem Automatisierungsgerät ein Zeitschlitz der Mehrzahl von Zeitschlitzen zugeordnet ist, wobei das Feldbussignal in den Zeitschlitz eingekapselt ist, und wobei die Netzwerkschnittstelle ausgebildet ist, das Feldbussignal aus dem Zeitschlitz zu entkapseln. Dadurch wird der Vorteil erreicht, dass eine Übertragung des Feldbussignals im Zeitmultiplex realisiert werden kann.

Gemäß einem dritten Aspekt betrifft die Erfindung ein Kommunikationssystem, mit einem Feldbusgerät zum Kommunizieren mit einem entfernten Automatisierungsgerät über ein Kommunikationsnetzwerk gemäß dem ersten Aspekt der Erfindung, und einem weiteren Feldbusgerät zum Kommunizieren mit dem entfernten Automatisierungsgerät über einen Feldbus gemäß dem zweiten Aspekt der Erfindung. Dadurch wird der Vorteil erreicht, dass ein effizientes Konzept zur Kommunikation zwischen räumlich verteilten Automatisierungsgeräten realisiert werden kann.

Gemäß einer Ausführungsform ist das Kommunikationsnetzwerk ein Kommunikationsnetzwerk der fünften Generation (5G) oder einer weiteren Generation, wobei das Kommunikationsnetzwerk ein Subnetzwerk, insbesondere ein Slice, umfasst, und wobei das Feldbusgerät und das weitere Feldbusgerät dem Subnetzwerk zugeordnet sind. Dadurch wird der Vorteil erreicht, dass eine effiziente Übertragung des Datenrahmens über ein Kommunikationsnetzwerk der fünften Generation (5G) oder einer weiteren Generation realisiert werden kann.

Gemäß einem vierten Aspekt betrifft die Erfindung ein Verfahren zum Kommunizieren mit einem entfernten Automatisierungsgerät über ein Kommunikationsnetzwerk unter Verwendung eines Feldbusgerätes. Das Feldbusgerät umfasst eine Feldbusschnittstelle und eine Netzwerkschnittstelle, wobei die Feldbusschnittstelle ausgebildet ist, das entfernte Automatisierungsgerät kommunikationstechnisch zu emulieren, und wobei die Netzwerkschnittstelle ausgebildet ist, über das Kommunikationsnetzwerk zu kommunizieren. Das Feldbusgerät ist mit einer Gruppe von örtlich benachbarten Automatisierungsgeräten über einen Feldbus verbindbar. Das Verfahren umfasst ein Empfangen eines Feldbussignals über den Feldbus durch die Feldbusschnittstelle, welches für das entfernte Automatisierungsgerät bestimmt ist, ein Einkapseln des Feldbussignals in einen Datenrahmen durch die Netzwerkschnittstelle, und ein Aussenden des Datenrahmens über das Kommunikationsnetzwerk an das entfernte Automatisierungsgerät durch die Netzwerkschnittstelle. Dadurch wird der Vorteil erreicht, dass ein effizientes Konzept zur Kommunikation zwischen räumlich verteilten Automatisierungsgeräten realisiert werden kann.

Das Verfahren kann durch das Feldbusgerät gemäß dem ersten Aspekt der Erfindung ausgeführt werden. Weitere Merkmale des Verfahrens ergeben sich unmittelbar aus den Merkmalen und/oder der Funktionalität des Feldbusgerätes gemäß dem ersten Aspekt der Erfindung.

Gemäß einem fünften Aspekt betrifft die Erfindung ein Verfahren zum Kommunizieren mit einem Automatisierungsgerät über einen Feldbus unter Verwendung eines Feldbusgerätes. Das Feldbusgerät umfasst eine Netzwerkschnittstelle und eine Feldbusschnittstelle, wobei die Netzwerkschnittstelle ausgebildet ist, über ein Kommunikationsnetzwerk zu kommunizieren, und wobei die Feldbusschnittstelle ausgebildet ist, mit dem Automatisierungsgerät über den Feldbus zu kommunizieren. Das Feldbusgerät ist mit einem weiteren Feldbusgerät über das Kommunikationsnetzwerk verbindbar, wobei das weitere Feldbusgerät ausgebildet ist, das Automatisierungsgerät kommunikationstechnisch zu emulieren. Das Verfahren umfasst ein Empfangen eines Datenrahmens über das Kommunikationsnetzwerk von dem weiteren Feldbusgerät durch die Netzwerkschnittstelle, ein Entkapseln eines Feldbussignals aus dem Datenrahmen durch die Netzwerkschnittstelle, welches für das Automatisierungsgerät bestimmt ist, und ein Aussenden des Feldbussignals über den Feldbus an das Automatisierungsgerät durch die Feldbusschnittstelle. Dadurch wird der Vorteil erreicht, dass ein effizientes Konzept zur Kommunikation zwischen räumlich verteilten Automatisierungsgeräten realisiert werden kann.

Das Verfahren kann durch das Feldbusgerät gemäß dem zweiten Aspekt der Erfindung ausgeführt werden. Weitere Merkmale des Verfahrens ergeben sich unmittelbar aus den Merkmalen und/oder der Funktionalität des Feldbusgerätes gemäß dem zweiten Aspekt der Erfindung.

Gemäß einem sechsten Aspekt betrifft die Erfindung ein Computerprogramm mit einem Programmcode zum Ausführen des Verfahrens gemäß dem vierten Aspekt der Erfindung oder des Verfahrens gemäß dem fünften Aspekt der Erfindung, wenn der Programmcode auf einem Computer ausgeführt wird. Dadurch wird der Vorteil erreicht, dass die Verfahren automatisiert ausgeführt werden können.

Das Feldbusgerät gemäß dem ersten Aspekt der Erfindung und/oder das Feldbusgerät gemäß dem zweiten Aspekt der Erfindung können programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm eines Feldbusgerätes zum Kommunizieren mit einem entfernten Automatisierungsgerät über ein Kommunikationsnetzwerk gemäß einer Ausführungsform;
Fig. 2 ein schematisches Diagramm eines Feldbusgerätes zum Kommunizieren mit einem Automatisierungsgerät über einen Feldbus gemäß einer Ausführungsform;
Fig. 3 ein schematisches Diagramm eines Kommunikationssystems mit einem Feldbusgerät und einem weiteren Feldbusgerät gemäß einer Ausführungsform;
Fig. 4 ein schematisches Diagramm eines Verfahrens zum Kommunizieren mit einem entfernten Automatisierungsgerät über ein Kommunikationsnetzwerk unter Verwendung eines Feldbusgerätes gemäß einer Ausführungsform;
Fig. 5 ein schematisches Diagramm eines Verfahrens zum Kommunizieren mit einem Automatisierungsgerät über einen Feldbus unter Verwendung eines Feldbusgerätes gemäß einer Ausführungsform;
Fig. 6 ein schematisches Diagramm eines Kommunikationssystems mit einem Feldbusgerät und einem weiteren Feldbusgerät gemäß einer Ausführungsform;
Fig. 7 ein schematisches Diagramm eines Datenrahmens mit einer Mehrzahl von Zeitschlitzen gemäß einer Ausführungsform;
Fig. 8 ein schematisches Diagramm eines Kommunikationssystems mit einem Feldbusgerät und einem weiteren Feldbusgerät gemäß einer Ausführungsform; und
Fig. 9 ein schematisches Diagramm eines Kommunikationssystems mit einem Feldbusgerät und einem weiteren Feldbusgerät gemäß einer Ausführungsform.

### DETAILIERTE BESCHREIBUNG DER FIGUREN

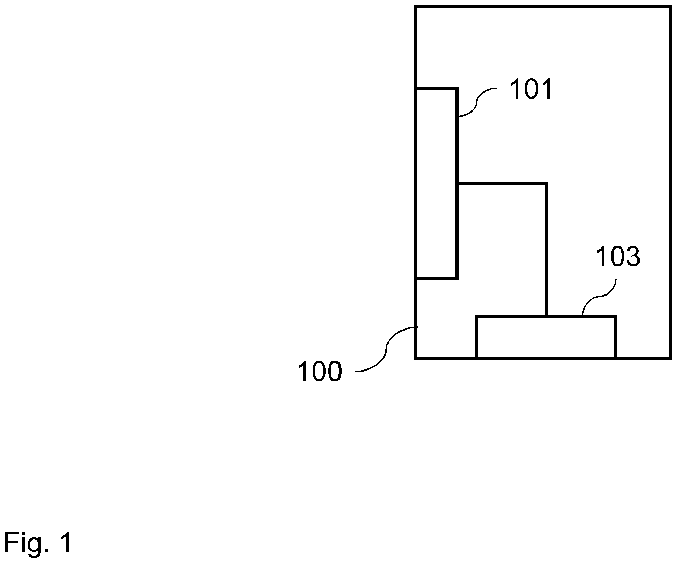

Fig. 1 zeigt ein schematisches Diagramm eines Feldbusgerätes 100 zum Kommunizieren mit einem entfernten Automatisierungsgerät über ein Kommunikationsnetzwerk gemäß einer Ausführungsform. Das Feldbusgerät 100 ist mit einer Gruppe von örtlich benachbarten Automatisierungsgeräten über einen Feldbus verbindbar.

Das Feldbusgerät 100 umfasst eine Feldbusschnittstelle 101 zum kommunikationstechnischen Emulieren des entfernten Automatisierungsgerätes, wobei die Feldbusschnittstelle 101 ausgebildet ist, ein Feldbussignal über den Feldbus zu empfangen, welches für das entfernte Automatisierungsgerät bestimmt ist.

Das Feldbusgerät 100 umfasst ferner eine Netzwerkschnittstelle 103 zum Kommunizieren über das Kommunikationsnetzwerk, wobei die Netzwerkschnittstelle 103 ausgebildet ist, das Feldbussignal in einen Datenrahmen einzukapseln, und den Datenrahmen über das Kommunikationsnetzwerk an das entfernte Automatisierungsgerät auszusenden.

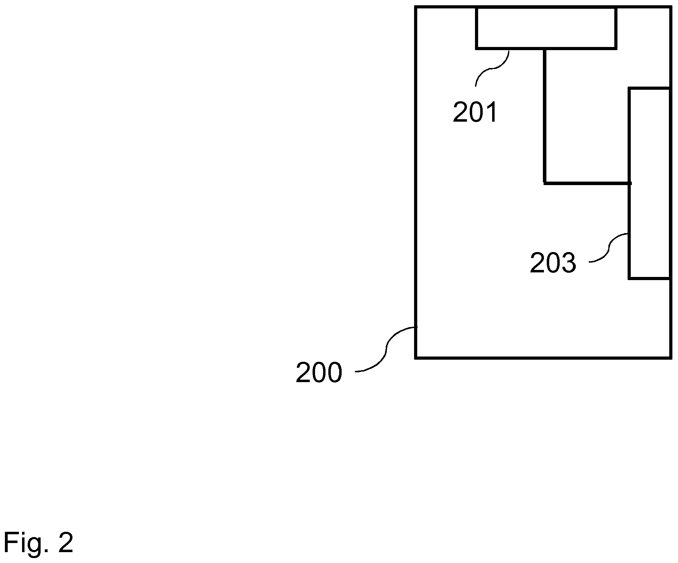

Fig. 2 zeigt ein schematisches Diagramm eines Feldbusgerätes 200 zum Kommunizieren mit einem Automatisierungsgerät über einen Feldbus gemäß einer Ausführungsform. Das Feldbusgerät 200 ist mit einem weiteren Feldbusgerät über ein Kommunikationsnetzwerk verbindbar. Das weitere Feldbusgerät ist ausgebildet, das Automatisierungsgerät kommunikationstechnisch zu emulieren.

Das Feldbusgerät 200 umfasst eine Netzwerkschnittstelle 201 zum Kommunizieren über das Kommunikationsnetzwerk, wobei die Netzwerkschnittstelle 201 ausgebildet ist, einen Datenrahmen über das Kommunikationsnetzwerk von dem weiteren Feldbusgerät zu empfangen, und ein Feldbussignal aus dem Datenrahmen zu entkapseln, welches für das Automatisierungsgerät bestimmt ist.

Das Feldbusgerät 200 umfasst ferner eine Feldbusschnittstelle 203 zum Kommunizieren mit dem Automatisierungsgerät über den Feldbus, wobei die Feldbusschnittstelle 203 ausgebildet ist, das Feldbussignal über den Feldbus an das Automatisierungsgerät auszusenden.

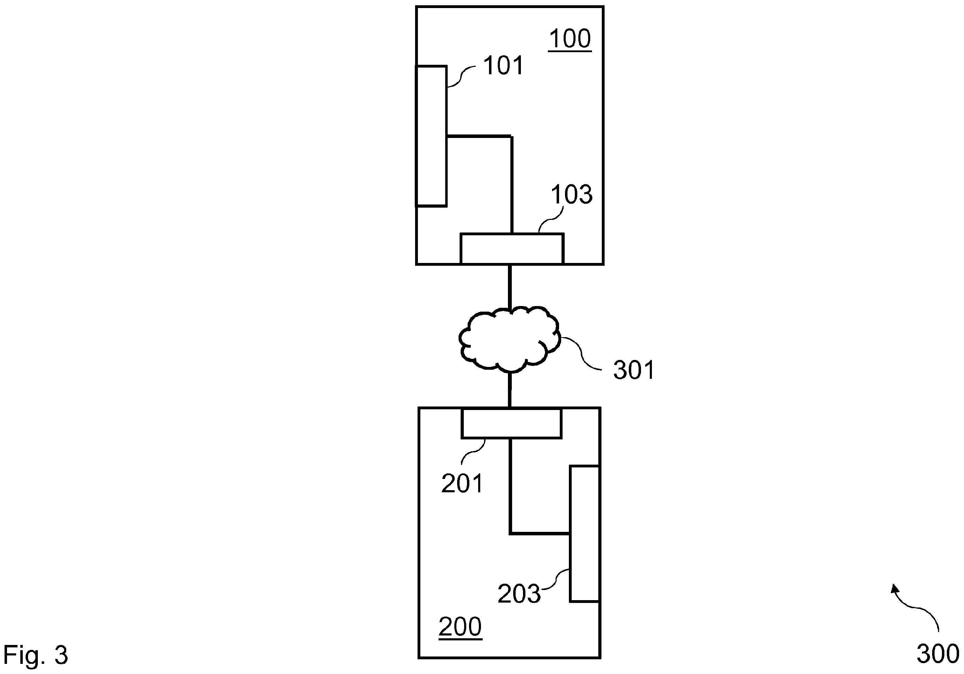

Fig. 3 zeigt ein schematisches Diagramm eines Kommunikationssystems 300 mit einem Feldbusgerät 100 und einem weiteren Feldbusgerät 200 gemäß einer Ausführungsform.

Das Feldbusgerät 100 ist ausgebildet, mit einem entfernten Automatisierungsgerät über ein Kommunikationsnetzwerk 301 zu kommunizieren. Das Feldbusgerät 100 umfasst eine Feldbusschnittstelle 101 und eine Netzwerkschnittstelle 103.

Das weitere Feldbusgerät 200 ist ausgebildet, mit dem entfernten Automatisierungsgerät über einen Feldbus zu kommunizieren. Das weitere Feldbusgerät 200 umfasst eine Netzwerkschnittstelle 201 und eine Feldbusschnittstelle 203.

Das Kommunikationsnetzwerk 301 kann ein Kommunikationsnetzwerk der fünften Generation (5G) oder einer weiteren Generation sein. Das Kommunikationsnetzwerk 301 kann ein Subnetzwerk, insbesondere ein Slice, umfassen, wobei das Feldbusgerät 100 und das weitere Feldbusgerät 200 dem Subnetzwerk zugeordnet sind.

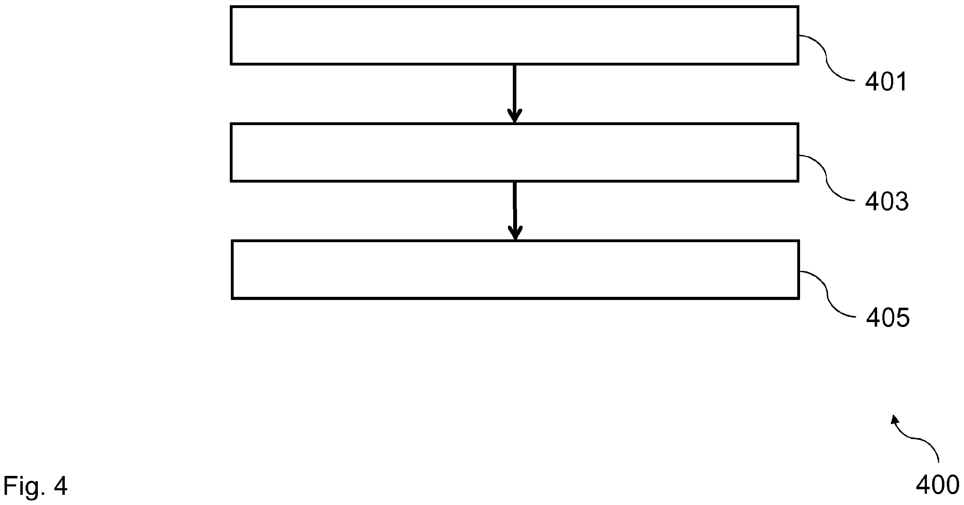

Fig. 4 zeigt ein schematisches Diagramm eines Verfahrens 400 zum Kommunizieren mit einem entfernten Automatisierungsgerät über ein Kommunikationsnetzwerk unter Verwendung eines Feldbusgerätes gemäß einer Ausführungsform. Das Feldbusgerät umfasst eine Feldbusschnittstelle und eine Netzwerkschnittstelle.

Die Feldbusschnittstelle ist ausgebildet, das entfernte Automatisierungsgerät kommunikationstechnisch zu emulieren. Die Netzwerkschnittstelle ist ausgebildet, über das Kommunikationsnetzwerk zu kommunizieren. Das Feldbusgerät ist mit einer Gruppe von örtlich benachbarten Automatisierungsgeräten über einen Feldbus verbindbar.

Das Verfahren 400 umfasst ein Empfangen 401 eines Feldbussignals über den Feldbus durch die Feldbusschnittstelle, welches für das entfernte Automatisierungsgerät bestimmt ist, ein Einkapseln 403 des Feldbussignals in einen Datenrahmen durch die Netzwerkschnittstelle, und ein Aussenden 405 des Datenrahmens über das Kommunikationsnetzwerk an das entfernte Automatisierungsgerät durch die Netzwerkschnittstelle.

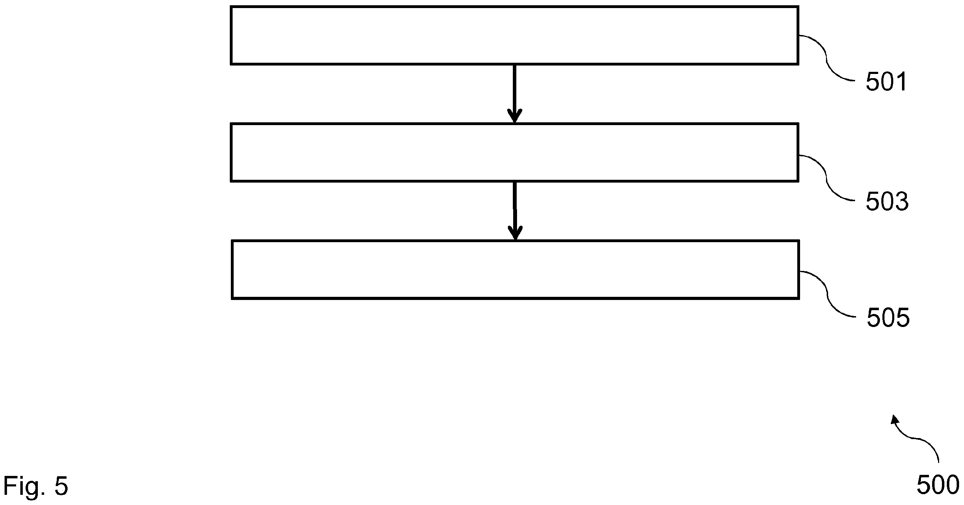

Fig. 5 zeigt ein schematisches Diagramm eines Verfahrens 500 zum Kommunizieren mit einem Automatisierungsgerät über einen Feldbus unter Verwendung eines Feldbusgerätes gemäß einer Ausführungsform.

Das Feldbusgerät umfasst eine Netzwerkschnittstelle und eine Feldbusschnittstelle. Die Netzwerkschnittstelle ist ausgebildet, über ein Kommunikationsnetzwerk zu kommunizieren. Die Feldbusschnittstelle ist ausgebildet, mit dem Automatisierungsgerät über den Feldbus zu kommunizieren. Das Feldbusgerät ist mit einem weiteren Feldbusgerät über das Kommunikationsnetzwerk verbindbar. Das weitere Feldbusgerät ist ausgebildet, das Automatisierungsgerät kommunikationstechnisch zu emulieren.

Das Verfahren 500 umfasst ein Empfangen 501 eines Datenrahmens über das Kommunikationsnetzwerk von dem weiteren Feldbusgerät durch die Netzwerkschnittstelle, ein Entkapseln 503 eines Feldbussignals aus dem Datenrahmen durch die Netzwerkschnittstelle, welches für das Automatisierungsgerät bestimmt ist, und ein Aussenden 505 des Feldbussignals über den Feldbus an das Automatisierungsgerät durch die Feldbusschnittstelle.

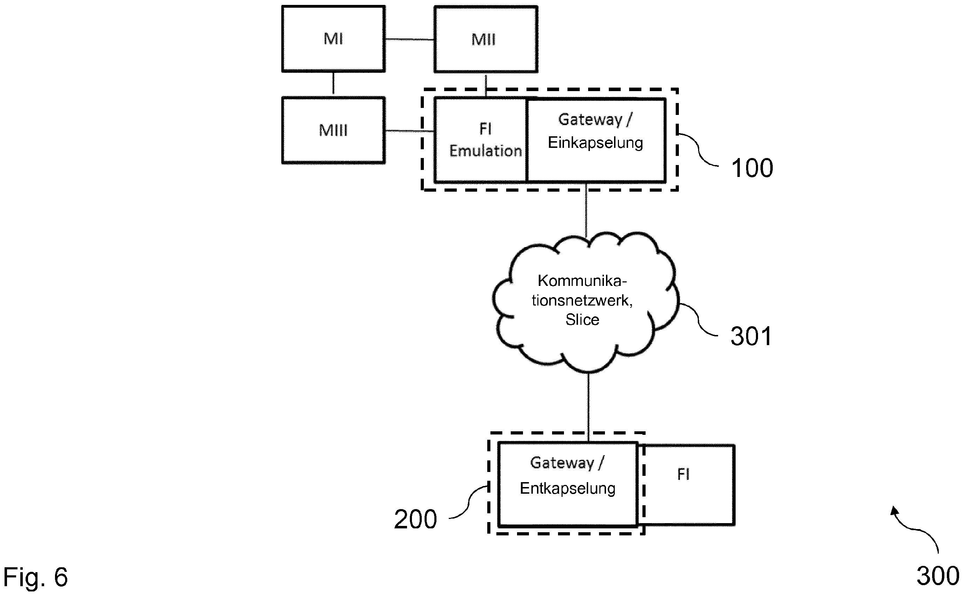

Fig. 6 zeigt ein schematisches Diagramm eines Kommunikationssystems 300 mit einem Feldbusgerät 100 und einem weiteren Feldbusgerät 200 gemäß einer Ausführungsform.

Das Feldbusgerät 100 ist ausgebildet, ein entferntes Automatisierungsgerät FI kommunikationstechnisch zu emulieren und ist mit einer Gruppe von örtlich benachbarten Automatisierungsgeräten MI, MII und MIII über einen Feldbus verbindbar. Das Feldbusgerät 100 ist ausgebildet, ein Feldbussignal über den Feldbus zu empfangen, welches für das entfernte Automatisierungsgerät FI bestimmt ist, das Feldbussignal in einen Datenrahmen einzukapseln, und den Datenrahmen über das Kommunikationsnetzwerk 301 an das entfernte Automatisierungsgerät FI auszusenden.

Das weitere Feldbusgerät 200 ist ausgebildet, den Datenrahmen über das Kommunikationsnetzwerk 301 zu empfangen, das Feldbussignal aus dem Datenrahmen zu entkapseln, und das Feldbussignal an das entfernte Automatisierungsgerät FI auszusenden. Das weitere Feldbusgerät 200 kann mit dem entfernten Automatisierungsgerät FI über einen Feldbus kommunizieren.

Gemäß einer Ausführungsform bildet das Feldbusgerät 100 mit dem weiteren Feldbusgerät 200 ein hybrides Gateway, welches eine bestehende Feldbusinfrastruktur an das Kommunikationsnetzwerk 301 anbindet. Die Kommunikation kann über ein Subnetzwerk, insbesondere ein Slice, des Kommunikationsnetzwerkes 301 erfolgen.

Die Automatisierungsgeräte MI, MII und MIII können Industriemaschinen sein, welche örtlich benachbart an einem bestimmten Ort über einen Feldbus kommunizieren, beispielsweise Ring-basiert in einer Lagerhalle. Gemäß einer Ausführungsform wird das Automatisierungsgerät FI in den bestehenden Feldbus in eine Ring-basierte Anordnung eingebunden. Das Automatisierungsgerät FI ist dabei physikalisch an einem anderen Ort angeordnet und/oder ist Teil eines Subnetzwerkes oder einer Slice des Kommunikationsnetzwerkes 301.

Gemäß einer Ausführungsform werden vorhandene Kommunikationsressourcen für die Kommunikation über das Kommunikationsnetzwerk 301, beispielsweise das Internet, eingesetzt, sodass es beispielsweise möglich wird, mit dem Automatisierungsgerät FI mittels Telegrammen zu kommunizieren. Den örtlich benachbarten Automatisierungsgeräten MI, MII und MIII wird hierzu kommunikationstechnisch vorgetäuscht, das Automatisierungsgerät FI sei örtlich vorhanden. Dazu kann ein Emulator eingesetzt werden, welcher das Automatisierungsgerät FI kommunikationstechnisch emuliert.

In einem einfachen Fall kann das Feldbusgerät 100 eine Feldbusschnittstelle 101 aufweisen, welcher eine Feldbusnetzwerkadresse zugeordnet ist. Die Feldbusschnittstelle 101 ist vorgesehen, um Feldbussignale zu empfangen und weiterzuleiten. Dem Feldbusgerät 100 kann eine Feldbusnetzwerkadresse zugeordnet sein. Das Feldbusgerät 100 kann kommunikationstechnisch in eine Ring-basierte Anordnung eingebunden sein.

Das Feldbusgerät 100 kann ferner auf Steuerbefehle oder Daten wie ein standardisiertes Feldbusgerät reagieren, also beispielsweise Bestätigungssignale (engl. Acknowledgements, ACKs) ansprechend auf einen Empfang eines Steuerbefehls oder von Daten übermitteln.

Für die Kommunikation mit dem Automatisierungsgerät FI über das Kommunikationsnetzwerk 301 kann das Feldbusgerät 100 zudem ein Gateway umfassen, oder mit einem Gateway kommunikationstechnisch verbunden sein. Gemäß einer Ausführungsform kapselt das Gateway die empfangenen Feldbussignale für das Automatisierungsgerät FI ein und übermittelt diese eingekapselten Feldbussignale über das Kommunikationsnetzwerk 301 an das Gateway, das dem Automatisierungsgerät FI physikalisch zugeordnet ist. Das Automatisierungsgerät FI hat dabei eine eigene Feldbusnetzwerkadresse. Auf diese Weise können die örtlich benachbarten Automatisierungsgeräte MI, MII und MIII sowie das räumlich entfernte Automatisierungsgerät FI miteinander kommunizieren.

Ein Vorteil des Konzeptes besteht beispielsweise darin, dass bestehende Feldbusinfrastrukturen unverändert bleiben können. Gemäß einer Ausführungsform werden hierfür das Feldbusgerät 100 und das weitere Feldbusgerät 200, gegebenenfalls mit einem Emulator und einem Gateway, verwendet.

Es gibt mehrere Varianten, wie die Feldbussignale das Automatisierungsgerät FI erreichen können. Eine Variante besteht darin, die Feldbussignale, beispielsweise als Telegramme, mittels Einkapselung (engl. Encapsulation) zu übermitteln. Hierbei werden die Feldbussignale als Nutzdaten (engl. Payload) in einem Datenrahmen eines Kommunikationsprotokolls übermittelt, welches zwischen den Gateways eingesetzt wird, wie beispielsweise IPv6. Hierbei kann der gesamte Datenrahmen übermittelt werden. Der Gateway kann die Feldbussignale in den Datenrahmen verpacken, sodass an den Automatisierungsgeräten keinerlei Anpassungen durchgeführt werden müssen.

Eine weitere Variante ist die Konvertierung von Datenrahmen der Feldbussignale in Datenrahmen anderer Kommunikationsprotokolle. Dies kann beispielsweise durch eine Mapping-Tabelle realisiert werden. Die Konvertierung kann weiter vereinfacht werden, wenn Telegramme versendet werden sollen.

Bei der Kommunikation mit dem Automatisierungsgerät FI über das Feldbusgerät 100 kann, insbesondere bei Echtzeitanwendungen, eine zeitliche Verzögerung (engl. Delay) berücksichtigt werden. Die zeitliche Verzögerung kann beispielsweise in einer Initialisierungsphase gemessen werden.

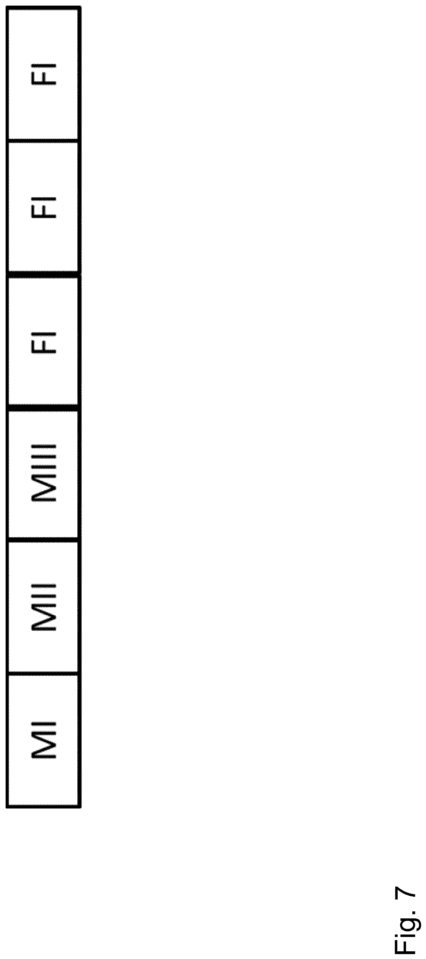

Fig. 7 zeigt ein schematisches Diagramm eines Datenrahmens mit einer Mehrzahl von Zeitschlitzen gemäß einer Ausführungsform. Die Zeitschlitze sind den Automatisierungsgeräten MI, MII, MIII und FI zugeordnet.

Zur Kommunikation über das Kommunikationsnetzwerk im Zeitmultiplex können für das Automatisierungsgerät FI bestimmte Zeitschlitze reserviert werden, welche für die Automatisierungsgeräte MI, MII und MIII gesperrt sein können. Die Kommunikation mit dem Automatisierungsgerät FI kann über diese Zeitschlitze erfolgen. Dadurch kann beispielsweise eine zeitliche Verzögerung effizient berücksichtigt werden.

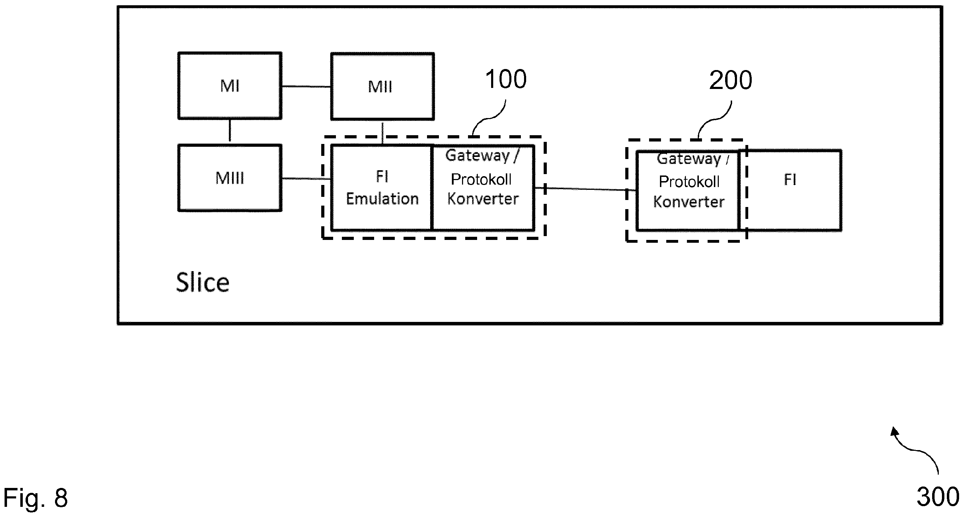

Fig. 8 zeigt ein schematisches Diagramm eines Kommunikationssystems 300 mit einem Feldbusgerät 100 und einem weiteren Feldbusgerät 200 gemäß einer Ausführungsform.

Bei einer Kommunikation zwischen dem Feldbusgerät 100 und dem weiteren Feldbusgerät 200 über ein Kommunikationsnetzwerk der fünften Generation (5G) oder einer weiteren Generation kann ein Slice zur Kommunikation bereitgestellt werden. Hierbei können das Feldbusgerät 100, das weitere Feldbusgerät 200, das Automatisierungsgerät FI sowie die Automatisierungsgeräte MI, MII und MIII dem Slice zugeordnet sein.

Die Netzwerkschnittstelle des Feldbusgerätes 100 und die Netzwerkschnittstelle des weiteren Feldbusgerätes 200 können jeweils ausgebildet sein, eine Konvertierung eines Kommunikationsprotokolls durchzuführen.

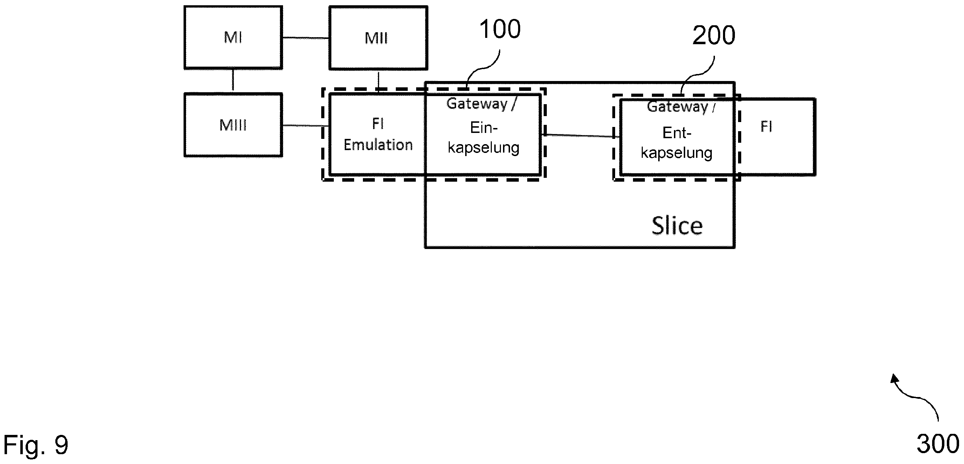

Fig. 9 zeigt ein schematisches Diagramm eines Kommunikationssystems 300 mit einem Feldbusgerät 100 und einem weiteren Feldbusgerät 200 gemäß einer Ausführungsform.

Bei einer Kommunikation zwischen dem Feldbusgerät 100 und dem weiteren Feldbusgerät 200 über ein Kommunikationsnetzwerk der fünften Generation (5G) oder einer weiteren Generation kann ein Slice zur Kommunikation bereitgestellt werden. Hierbei können die Netzwerkschnittstelle des Feldbusgerätes 100, insbesondere mit einem Gateway, und die Netzwerkschnittstelle des weiteren Feldbusgerätes 200, insbesondere mit einem Gateway, dem Slice zugeordnet sein.

Mithin kann ein dediziertes Slice als Dienst bereitgestellt werden. Der Dienst kann auch auf eine Emulation der Automatisierungsgeräte ausgeweitet werden. Auf diese Weise kann ein Dienst bereitgestellt werden, welcher die Nutzung einer bestehenden Infrastruktur im Bereich der Industrieautomatisierungstechnik ermöglicht.

### BEZUGSZEICHENLISTE

- 100: Feldbusgerät
- 101: Feldbusschnittstelle
- 103: Netzwerkschnittstelle

- 200: Feldbusgerät
- 201: Netzwerkschnittstelle
- 203: Feldbusschnittstelle

- 300: Kommunikationssystem
- 301: Kommunikationsnetzwerk

- 400: Verfahren zum Kommunizieren mit einem entfernten Automatisierungsgerät
- 401: Empfangen
- 403: Einkapseln
- 405: Aussenden

- 500: Verfahren zum Kommunizieren mit einem Automatisierungsgerät
- 501: Empfangen
- 503: Entkapseln
- 505: Aussenden

- FI: Automatisierungsgerät
- MI: Automatisierungsgerät
- MII: Automatisierungsgerät
- MIII: Automatisierungsgerät

## Patentansprüche

1. Feldbusgerät (200) zum Kommunizieren mit einem Automatisierungsgerät (FI) über einen Feldbus, wobei das Feldbusgerät (200) mit einem weiteren Feldbusgerät (100) über ein Kommunikationsnetzwerk (301) verbindbar ist, wobei das weitere Feldbusgerät (100) ausgebildet ist, das Automatisierungsgerät (FI) kommunikationstechnisch zu emulieren, wobei das kommunikationstechnische Emulieren ein Nachbilden eines kommunikationstechnischen Verhaltens des Automatisierungsgerätes (FI) umfasst, mit:
einer Netzwerkschnittstelle (201) zum Kommunizieren mit dem weiteren Feldbusgerät (100) über das Kommunikationsnetzwerk (301), wobei die Netzwerkschnittstelle (201) ausgebildet ist, einen Datenrahmen über das Kommunikationsnetzwerk (301) von dem weiteren Feldbusgerät (100) zu empfangen, und ein Feldbussignal aus dem Datenrahmen zu entkapseln, wobei das Feldbussignal für das Automatisierungsgerät (FI) bestimmt ist; und
einer Feldbusschnittstelle (203) zum Kommunizieren mit dem Automatisierungsgerät (FI) über den Feldbus, wobei die Feldbusschnittstelle (203) ausgebildet ist, das Feldbussignal über den Feldbus an das Automatisierungsgerät (FI) auszusenden;
wobei der Datenrahmen eine Mehrzahl von Zeitschlitzen aufweist, wobei dem Automatisierungsgerät (FI) ein Zeitschlitz der Mehrzahl von Zeitschlitzen zugeordnet ist, wobei das Feldbussignal in den Zeitschlitz eingekapselt ist, und wobei die Netzwerkschnittstelle (201) ausgebildet ist, das Feldbussignal aus dem Zeitschlitz zu entkapseln.

2. Feldbusgerät (200) nach Anspruch 1, wobei die Netzwerkschnittstelle (201) ein Gateway zum Aufbauen einer Kommunikationsverbindung zwischen dem Feldbusgerät (200) und dem weiteren Feldbusgerät (100) über das Kommunikationsnetzwerk (301) umfasst.

3. Kommunikationssystem (300), mit:
einem Feldbusgerät (100) zum Kommunizieren mit einem entfernten Automatisierungsgerät (FI) über ein Kommunikationsnetzwerk (301), wobei das Feldbusgerät (100) mit einer Gruppe von örtlich benachbarten Automatisierungsgeräten (MI, MII, MIII) über einen Feldbus verbindbar ist, mit:
einer Feldbusschnittstelle (101) zum kommunikationstechnischen Emulieren des entfernten Automatisierungsgerätes (FI), wobei das kommunikationstechnische Emulieren ein Nachbilden eines kommunikationstechnischen Verhaltens des entfernten Automatisierungsgerätes (FI) umfasst, wobei die Feldbusschnittstelle (101) ausgebildet ist, ein Feldbussignal von einem örtlich benachbarten Automatisierungsgerät (MI, MII, MIII) über den Feldbus zu empfangen, wobei das Feldbussignal für das entfernte Automatisierungsgerät (FI) bestimmt ist; und
einer Netzwerkschnittstelle (103) zum Kommunizieren mit dem entfernten Automatisierungsgerät (FI) über das Kommunikationsnetzwerk (301), wobei die Netzwerkschnittstelle (103) ausgebildet ist, das Feldbussignal in einen Datenrahmen einzukapseln, und den Datenrahmen über das Kommunikationsnetzwerk (301) an das entfernte Automatisierungsgerät (FI) auszusenden;
wobei der Datenrahmen eine Mehrzahl von Zeitschlitzen aufweist, wobei dem entfernten Automatisierungsgerät (FI) ein Zeitschlitz der Mehrzahl von Zeitschlitzen zugeordnet ist, und wobei die Netzwerkschnittstelle (103) ausgebildet ist, das Feldbussignal in den Zeitschlitz einzukapseln; und
einem weiteren Feldbusgerät (200) zum Kommunizieren mit dem entfernten Automatisierungsgerät (FI) über einen weiteren Feldbus nach einem der Ansprüche 1 oder 2.

4. Kommunikationssystem (300) nach Anspruch 3, wobei das Kommunikationsnetzwerk (301) ein Kommunikationsnetzwerk der fünften Generation (5G) oder einer weiteren Generation ist, wobei das Kommunikationsnetzwerk (301) ein Subnetzwerk, insbesondere ein Slice, umfasst, und wobei das Feldbusgerät (100) und das weitere Feldbusgerät (200) dem Subnetzwerk zugeordnet sind.

5. Verfahren (500) zum Kommunizieren mit einem Automatisierungsgerät (FI) über einen Feldbus unter Verwendung eines Feldbusgerätes (200), wobei das Feldbusgerät (200) eine Netzwerkschnittstelle (201) und eine Feldbusschnittstelle (203) umfasst, wobei die Netzwerkschnittstelle (201) ausgebildet ist, mit dem weiteren Feldbusgerät (100) über ein Kommunikationsnetzwerk (301) zu kommunizieren, wobei die Feldbusschnittstelle (203) ausgebildet ist, mit dem Automatisierungsgerät (FI) über den Feldbus zu kommunizieren, wobei das Feldbusgerät (200) mit einem weiteren Feldbusgerät (100) über das Kommunikationsnetzwerk (301) verbindbar ist, wobei das weitere Feldbusgerät (100) ausgebildet ist, das Automatisierungsgerät (FI) kommunikationstechnisch zu emulieren, wobei das kommunikationstechnische Emulieren ein Nachbilden eines kommunikationstechnischen Verhaltens des Automatisierungsgerätes (FI) umfasst, mit:
Empfangen (501) eines Datenrahmens über das Kommunikationsnetzwerk (301) von dem weiteren Feldbusgerät (100) durch die Netzwerkschnittstelle (201);
Entkapseln (503) eines Feldbussignals aus dem Datenrahmen durch die Netzwerkschnittstelle (201), wobei das Feldbussignal für das Automatisierungsgerät (FI) bestimmt ist; und
Aussenden (505) des Feldbussignals über den Feldbus an das Automatisierungsgerät (FI) durch die Feldbusschnittstelle (203);
wobei der Datenrahmen eine Mehrzahl von Zeitschlitzen aufweist, wobei dem Automatisierungsgerät (FI) ein Zeitschlitz der Mehrzahl von Zeitschlitzen zugeordnet ist, wobei das Feldbussignal in den Zeitschlitz eingekapselt ist, und wobei das Verfahren (500) ein Entkapseln des Feldbussignals aus dem Zeitschlitz durch die Netzwerkschnittstelle (201) umfasst.

6. Computerprogramm mit einem Programmcode zum Ausführen des Verfahrens (500) nach Anspruch 5, wenn der Programmcode auf einem Computer ausgeführt wird.

## Claims

1. A fieldbus device (200) for communicating with an automation device (FI) via a field bus, wherein the fieldbus device (200) can be connected to another fieldbus device (100) via a communication network (301), wherein the other fieldbus device (100) is designed to emulate the automation device (FI) on communication technological level, wherein the communication technological emulation entails replicating a communication technological behaviour of the automation device (FI), with:
a network interface (201) for communicating with the other fieldbus device (100) via the communication network (301), wherein the network interface (201) is designed to receive a data frame from the further fieldbus device (100) via the communication network (301) and to decapsulate a fieldbus signal from the data frame, wherein the fieldbus signal is intended for the automation device (FI); and
a fieldbus interface (203) for communicating with the automation device (FI) via the fieldbus, wherein the fieldbus interface (203) is designed to transmit the fieldbus signal to the automation device (FI) via the fieldbus;
wherein the data frame comprises a plurality of time slots, wherein a time slot from the plurality of time slots is assigned to the automation device (FI), wherein the fieldbus signal is encapsulated into the time slot, and wherein the network interface (201) is designed to decapsulate the fieldbus signal from the time slot.

2. The fieldbus device (200) according to Claim 1, wherein the network interface (201) comprises a gateway for establishing a communication connection between the fieldbus device (200) and the other fieldbus device (100) via the communication network (301).

3. A communication system (300), with:
a fieldbus device (100) for communicating with a remote automation device (FI) via a communication network (301), wherein the fieldbus device (100) can be connected to a group of locally adjacent automation devices (MI, MII, MIII) via a fieldbus, with:
a fieldbus interface (101) for the communication technological emulation of the remote automation device (FI), wherein the communication technological emulation comprises replicating a communication technological behaviour of the remote automation device (FI), wherein the fieldbus interface (101) is designed to receive a fieldbus signal from a locally adjacent automation device (MI, MII, MIII) via the fieldbus, wherein the fieldbus signal is intended for the remote automation device (FI); and
a network interface (103) for communicating with the remote automation device (FI) via the communication network (301), wherein the network interface (103) is designed to encapsulate the fieldbus signal into a data frame and to transmit data frame to the remote to the remote automation device (FI) via the communication network (301);
wherein the data frame comprises a plurality of time slots, wherein a time slot from the plurality of time slots is assigned to the remote automation device (FI), and wherein the network interface (103) is designed to encapsulate the fieldbus signal into the time slot; and
another fieldbus device (200) for communication with a remote automation device (FI) via another fieldbus according to one of the Claims 1 or 2.

4. The communication system (300) according to Claim 3, wherein the communication network (301) is a communication network of the fifth generation (5G) or another generation, wherein the communication network (301) comprises a subnetwork, in particular, a slice, and wherein the fieldbus device (100) and the other fieldbus device (200) are assigned to the subnetwork.

5. A method (500) for communicating with an automation device (FI) via a fieldbus using a fieldbus device (200), wherein the fieldbus device (200) comprises a network interface (201) and a fieldbus interface (203), wherein the network interface (201) is designed to communicate with the other fieldbus device (100) via a communication network (301), wherein the fieldbus interface (203) is designed to communicate with the automation device (FI) via the fieldbus, wherein the fieldbus device (200) can be connected to another fieldbus device (100) via the communication network (301), wherein the other fieldbus device (100) is designed to emulate the automation device (FI) on a communication technological level, wherein the communication technological emulation entails replicating a communication technological behaviour of the automation device (FI); with:
receiving (501) of a data frame via the communication network (301) from the other fieldbus device (100) by the network interface (201);
encapsulating (503) a fieldbus signal from the data frame by the network interface (201), wherein the fieldbus signal is intended for the automation device (FI); and
sending (505) the fieldbus signal to the automation device (FI) by the fieldbus interface (203) via the field bus;
wherein the data frame comprises a plurality of time slots, wherein one time slot from the plurality of time slots is assigned to the automation device (FI), wherein the fieldbus signal is encapsulated into the time slot, and wherein the method (500) comprises an encapsulation of the fieldbus signal from the time slot by the network interface (201).

6. A computer program with a program code for executing a method (500) according to Claim 5 if the program code is executed on a computer.

## Revendications

1. Appareil de bus de terrain (200) destiné à la communication avec un appareil d'automatisation (FI) par le biais d'un bus de terrain, sachant que l'appareil de bus de terrain (200) peut être relié à un autre appareil de bus de terrain (100) par le biais d'un réseau de communication (301), sachant que l'autre appareil de bus de terrain (100) est constitué pour émuler l'appareil d'automatisation (FI) selon la technique de communication, sachant que l'émulation en technique de communication comprend une reproduction d'un comportement de technique de communication de l'appareil d'automatisation (FI), avec :
une interface de réseau (201) destinée à la communication avec l'autre appareil de bus de terrain (100) par le biais du réseau de communication (301), sachant que l'interface de réseau (201) est constituée pour recevoir une trame de données de l'autre appareil de bus de terrain (100) par le biais du réseau de communication (301) et pour décapsuler un signal de bus de terrain de la trame de données, sachant que le signal de bus de terrain est déterminé pour l'appareil d'automatisation (FI), et
une interface de bus de terrain (203) destinée à la communication avec l'appareil d'automatisation (FI) par le biais du bus de terrain, sachant que l'interface de bus de terrain (203) est constituée pour émettre le signal de bus de terrain à l'appareil d'automatisation (FI) par le biais du bus de terrain,
sachant que la trame de données comporte une pluralité de tranches de temps, sachant qu'une tranche de temps de la pluralité des tranches de temps est attribuée à l'appareil d'automatisation (FI), sachant que le signal de bus de terrain est encapsulé dans la tranche de temps et sachant que l'interface de réseau (201) est constituée pour décapsuler le signal de bus de terrain de la tranche de temps.

2. Appareil de bus de terrain (200) selon la revendication 1, sachant que l'interface de réseau (201) comprend une passerelle destinée à l'édification d'une liaison de communication entre l'appareil de bus de terrain (200) et l'autre appareil de bus de terrain (100) par le biais du réseau de communication (301).

3. Système de communication (300) avec :
un appareil de bus de terrain (100) destiné à la communication avec un appareil d'automatisation éloigné (FI) par le biais d'un réseau de communication (301), sachant que l'appareil de bus de terrain (100) peut être relié à un groupe d'appareils d'automatisation (MI, MII, MIII) localement voisins par le biais d'un bus de terrain, avec :
une interface de bus de terrain (101) destinée à l'émulation en technique de communication de l'appareil d'automatisation (FI) éloigné, sachant que l'émulation en technique de communication comprend une reproduction d'un comportement de technique de communication de l'appareil d'automatisation (FI) éloigné, sachant que l'interface de bus de terrain (101) est constituée pour recevoir un signal de bus de terrain d'un appareil d'automatisation (MI, MII, MIII) localement voisin par le biais du bus de terrain, sachant que le signal de bus de terrain est déterminé pour l'appareil d'automatisation (FI) éloigné, et
une interface de réseau (103) destinée à la communication avec l'appareil d'automatisation (FI) éloigné par le biais du réseau de communication (301), sachant que l'interface de réseau (103) est constituée pour encapsuler le signal de bus de terrain dans une trame de données et émettre la trame de données à l'appareil d'automatisation (FI) éloigné par le biais du réseau de communication (301),
sachant que la trame de données comporte une pluralité de tranches de temps, sachant qu'une tranche de temps de la pluralité des tranches de temps est attribuée à l'appareil d'automatisation (FI) éloigné et sachant que l'interface de réseau (103) est constituée pour encapsuler le signal bus de terrain dans la tranche de temps, et
un autre appareil de bus d terrain (200) destiné à la communication avec l'appareil d'automatisation (FI) éloigné par le biais d'un autre bus de terrain selon l'une quelconque des revendications 1 ou 2.

4. Système de communication (300) selon la revendication 3, sachant que le réseau de communication (301) est un réseau de communication de la cinquième génération (5G) ou d'une autre génération, sachant que le réseau de communication (301) comprend un sous-réseau, en particulier une tranche et sachant que l'appareil de bus de terrain (100) et l'autre appareil de bus de terrain (200) sont attribués au sous-réseau.

5. Procédé (500) destiné à la communication avec un appareil d'automatisation (FI) par le biais d'un bus de terrain en utilisant un appareil de bus de terrain (200), sachant que l'appareil de bus de terrain (200) comprend une interface de réseau (201) et une interface de bus de terrain (203), sachant que l'interface de réseau (201) est constituée pour communiquer avec l'autre appareil de bus de terrain (100) par le biais d'un réseau de communication (301), sachant que l'interface de bus de terrain (203) est constituée pour communiquer avec l'appareil d'automatisation (FI) par le biais du bus de terrain, sachant que l'appareil de bus de terrain (200) peut être relié à un autre appareil de bus de terrain (100) par le biais du réseau de communication (301), sachant que l'autre appareil de bus de terrain (100) est constitué pour émuler selon la technique de communication l'appareil d'automatisation (FI), sachant que l'émulation de technique de communication comprend une reproduction d'un comportement de technique de communication de l'appareil d'automatisation (FI) avec :
réception (501) d'une trame de données par le biais du réseau de communication (301) de l'autre appareil de bus de terrain (100) à travers l'interface de réseau (201),
encapsulage (503) d'un signal de bus de terrain à partir de la trame de données par l'interface de réseau (201), sachant que le signal de bus de terrain est déterminé pour l'appareil d'automatisation (FI), et
émission (505) du signal de bus de terrain par le biais u bus de terrain à l'appareil d'automatisation (FI) par l'interface de bus de terrain (203),
sachant que la trame de données comporte une pluralité de tranches de temps, sachant qu'une tranche de temps de la pluralité des tranches de temps est attribuée à l'appareil d'automatisation (FI), sachant que le signal de bus de terrain est encapsulé dans la tranche de temps et sachant que le procédé (500) comprend un décapsulage du signal de bus de terrain de la tranche de temps par l'interface de réseau (201).

6. Programme informatique avec un code de programmation pour exécuter le procédé (500) selon la revendication 5, lorsque le code de programmation est exécuté sur un ordinateur.
